# FASCICULE DE BREVET EUROPEEN

(11) **EP 3 052 685 B1**
(45) Date de publication et mention de la délivrance du brevet: **15.11.2017**
(21) Numéro de dépôt: 14796210.4
(22) Date de dépôt: 29.09.2014
(51) Int. Cl.: B29K 105/08, B29L 31/08, B29C 70/22, B29C 70/24, F01D 5/28, D03D 25/00

(54) **STRUCTURE FIBREUSE AVEC REGROUPEMENT DES FLOTTES**
FASERSTRUKTUR MIT GRUPPIERUNG VON FLOTTIERUNGEN
FIBROUS STRUCTURE WITH GROUPING OF FLOATS

(30) Priorité: 01.10.2013 FR 1359476
(43) Date de publication de la demande: 10.08.2016
(73) Titulaire: SNECMA, 75015 Paris (FR); SAFRAN, 75015 Paris (FR)
(72) Inventeur: GIMAT, Matthieu, F-77550 Moissy-Cramayel Cedex (FR); MARCHAL, Yann, F-77550 Moissy-Cramayel Cedex (FR); COUPE, Dominique, F-77310 Saint-Fargeau-Ponthierry (FR)
(74) Mandataire: Desormiere, Pierre-Louis
(86) Numéro de dépôt international: PCT/FR2014/052449
(87) Numéro de publication internationale: WO 2015/049449

(56) Documents cités:
- WO-A1-2010/001003
- WO-A2-2013/088038
- WO-A2-2013/088039
- WO-A2-2013/104852
- FR-A1- 2 953 225

## Description

### Arrière-plan de l'invention

La présente invention concerne la réalisation de pièces en matériau composite et plus particulièrement la réalisation de structures fibreuses de renfort pour de telles pièces.

Un domaine d'application de l'invention est plus particulièrement la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

Dans le cadre de la réalisation de structures fibreuses par tissage tridimensionnel destinées à constituer le renfort fibreux d'une pièce en matériau composite, telle qu'une aube de moteur aéronautique, on doit retirer au cours du tissage de la structure des fils à la fois dans le sens chaîne et dans le sens trame pour respecter les diminutions d'épaisseurs dans la pièce, comme par exemple au niveau de l'échasse de l'aube, afin d'obtenir une préforme fibreuse qui présente la forme et les dimensions quasi-définitives de l'aube (« net shape »). Ces retraits de fils se traduisent, au cours du tissage, par l'apparition de couches de fils qui ne sont pas tissés (flottées) et qui sont ensuite découpés lors d'une seconde opération.

La découpe des flottés de chaque couche est délicate et fastidieuse en raison de l'absence de cohésion entre les fils non tissés issus d'une même couche. En effet, afin de réaliser une découpe au plus près du contour de la préforme sans endommager cette dernière, il est préférable de découper les fils couche par couche en commençant par la couche présente en surface de la structure et en poursuivant avec les couches sous-jacentes. Cette découpe couche par couche nécessite l'intervention manuelle d'un opérateur qui saisit et découpe un par un les fils d'une même couche.

Le document WO 2013/088038 divulgue une structure fibreuse comprenant une portion d'ébauche formée en une seule pièce par tissage tridimensionnel et correspondant à une préforme de renfort fibreux pour une pièce en matériau composite.

### Objet et résumé de l'invention

Il est donc souhaitable de pouvoir disposer de structures fibreuses permettant une saisie et une manipulation aisées de tous les flottés d'une même couche afin de permettre une découpe rapide et précise de ces derniers.

A cet effet, selon l'invention, il est proposé une structure fibreuse comprenant une portion d'ébauche formée en une seule pièce par un tissage tridimensionnel entre une première pluralité de couches de fils et une deuxième pluralité de couches de fils, ladite portion d'ébauche correspondant à tout ou partie d'une préforme de renfort fibreux pour une pièce en matériau composite, caractérisée en ce qu'elle comporte une ou plusieurs couches de tissu bidimensionnel, chaque couche de tissu bidimensionnel regroupant des fils d'une seule et même couche appartenant au moins à la première pluralité de couches de fils après leur sortie de la portion d'ébauche et en ce que chaque couche de tissu bidimensionnel s'étend en dehors de la portion d'ébauche dans la direction des fils de la couche de la première pluralité de couches de fils regroupés dans ladite couche de tissu bidimensionnel.

Ainsi, les fils non tissés appartenant à une même couche sont regroupés localement par une couche de tissu bidimensionnel, ce qui permet de saisir ensemble les flottés d'une même couche et de les découper précisément.

En outre, grâce à la structure fibreuse de l'invention, il est possible d'envisager une découpe automatique par une machine ou un robot des flottés, la machine pouvant saisir de façon fiable tous les flottés d'une même couche au niveau de la couche de tissu bidimensionnel et positionner précisément un outil de découpe à l'endroit où les flottés doivent être découpés.

Selon un mode de réalisation de la structure fibreuse de l'invention, les fils de la première pluralité de couches de fils correspondent à des fils de chaîne tandis que les fils de la deuxième pluralité de couches de fils correspondent à des fils de trame, et en ce que chaque couche de tissu bidimensionnel est adjacente à la portion d'ébauche. Dans ce cas, les fils d'une même couche sont regroupés au plus près de leur sortie de la portion d'ébauche. Selon un aspect de ce mode de réalisation, dans chaque couche de tissu bidimensionnel, les fils de la même couche de fils de chaîne sont tissés avec les fils d'une même couche de fils de trame.

Selon un autre mode de réalisation de la structure fibreuse de l'invention, chaque couche de tissu bidimensionnel est située à une distance déterminée de la portion d'ébauche. Selon un aspect de ce mode de réalisation, la structure comprend en outre des couches de tissu bidimensionnel regroupant les fils de trame extraits de la portion d'ébauche et appartenant à une même couche de fils de trame.

Selon un autre mode de réalisation de la structure fibreuse de l'invention, les fils de la première pluralité de couches de fils correspondent à des fils de chaîne tandis que les fils de la deuxième pluralité de couches de fils correspondent à des fils de trame, la portion d'ébauche comprenant une partie d'épaisseur décroissante et une partie d'épaisseur croissante, des fils de chaîne étant extraits de la portion d'ébauche au niveau de la partie d'épaisseur décroissante et réintroduits dans la portion d'ébauche au niveau de la partie d'épaisseur croissante, ladite structure comprenant des couches de tissu bidimensionnel regroupant les fils de chaîne extraits de la portion d'ébauche et appartenant à une même couche de fils de chaîne. Selon un aspect de ce mode de réalisation, chaque couche de tissu bidimensionnel comporte une découpe orientée perpendiculairement par rapport à la direction des fils de la première pluralité de couches.

Selon encore un autre mode de réalisation, les fils de la première pluralité de couches de fils correspondent à des fils de chaîne tandis que les fils de la deuxième pluralité de couches de fils correspondent à des fils de trame, la portion d'ébauche comprenant une partie d'épaisseur décroissante et une partie d'épaisseur croissante, des fils de trame étant extraits de la portion d'ébauche au niveau de la partie d'épaisseur décroissante et réintroduits dans la portion d'ébauche au niveau de la partie d'épaisseur croissante, ladite structure comprenant des couches de tissu bidimensionnel regroupant les fils de trame extraits de la portion d'ébauche et appartenant à une même couche de fils de trame. Selon un aspect de ce mode de réalisation, chaque couche de tissu bidimensionnel comporte une découpe orientée perpendiculairement par rapport à la direction des fils de la première pluralité de couches.

L'invention concerne également un procédé de fabrication d'une structure fibreuse comprenant le tissage en une seule pièce d'une portion d'ébauche par tissage tridimensionnel entre une première pluralité de couches de fils et une deuxième pluralité de couches de fils, ladite portion d'ébauche correspondant à tout ou partie d'une préforme de renfort fibreux pour une pièce en matériau composite, caractérisé en ce qu'il comprend en outre le tissage, en dehors de la portion d'ébauche, d'une ou plusieurs couches de tissu bidimensionnel, chaque couche de tissu bidimensionnel regroupant des fils d'une seule et même couche appartenant au moins à la première pluralité de couches de fils après leur sortie de la portion d'ébauche et en ce que chaque couche de tissu bidimensionnel s'étend en dehors de la portion d'ébauche dans la direction des fils de la couche de la première pluralité de couches de fils regroupés dans ladite couche de tissu bidimensionnel.

Selon un mode de réalisation du procédé de l'invention, les fils de la première pluralité de couches de fils correspondent à des fils de chaîne tandis que les fils de la deuxième pluralité de couches de fils correspondent à des fils de trame, chaque couche de tissu bidimensionnel étant tissée de manière adjacente à la portion d'ébauche. Selon un aspect de ce mode de réalisation, dans chaque couche de tissu bidimensionnel, les fils de la même couche de fils de chaîne sont tissés avec les fils d'une même couche de fils de trame.

Selon un autre mode de réalisation du procédé de l'invention, chaque couche de tissu bidimensionnel est tissée à une distance déterminée de la portion d'ébauche.

Selon un autre mode de réalisation du procédé de l'invention, les fils de la première pluralité de couches de fils correspondent à des fils de chaîne tandis que les fils de la deuxième pluralité de couches de fils correspondent à des fils de trame, la portion d'ébauche comprenant une partie d'épaisseur décroissante et une partie d'épaisseur croissante, des fils de chaîne étant extraits de la portion d'ébauche au niveau de la partie d'épaisseur décroissante et réintroduits dans la portion d'ébauche au niveau de la partie d'épaisseur croissante, ledit procédé comprenant le tissage de couches de tissu bidimensionnel regroupant les fils de chaîne extraits de la portion d'ébauche et appartenant à une même couche de fils de chaîne. Dans ce cas, le procédé peut comprendre en outre la formation d'une découpe dans chaque couche de tissu bidimensionnel, la découpe étant orientée perpendiculairement par rapport à la direction des fils de la première pluralité de couches.

Selon un autre mode de réalisation du procédé de l'invention, les fils de la première pluralité de couches de fils correspondent à des fils de chaîne tandis que les fils de la deuxième pluralité de couches de fils correspondent à des fils de trame, la portion d'ébauche comprenant une partie d'épaisseur décroissante et une partie d'épaisseur croissante, des fils de trame étant extraits de la portion d'ébauche au niveau de la partie d'épaisseur décroissante et réintroduits dans la portion d'ébauche au niveau de la partie d'épaisseur croissante, ledit procédé comprenant le tissage de couches de tissu bidimensionnel regroupant les fils de trame extraits de la portion d'ébauche et appartenant à une même couche de fils de trame. Dans ce cas, le procédé peut comprendre en outre la formation d'une découpe dans chaque couche de tissu bidimensionnel, la découpe étant orientée perpendiculairement par rapport à la direction des fils de la première pluralité de couches.

L'invention a encore pour objet un procédé de réalisation d'une préforme de renfort fibreux caractérisé en ce qu'il comprend les étapes suivantes :
- fabrication d'une texture fibreuse selon le procédé de l'invention,
- la saisie de chaque couche de tissu bidimensionnel et la découpe des fils de chaque couche de tissu bidimensionnel à la limite de la ou les portions d'ébauche de la structure fibreuse.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique illustrant le tissage multicouche d'une structure fibreuse pour la fabrication d'une aube de moteur aéronautique,
- la figure 2 est une vue schématique de dessus de la structure fibreuse de la figure 1,
- la figure 3 est une vue schématique d'une structure fibreuse conformément à un mode de réalisation de l'invention,
- la figure 4 est une vue en coupe trame à échelle agrandie d'une portion de la structure fibreuse de la figure 3,
- la figure 5 est une vue schématique d'une structure fibreuse conformément à un autre mode de réalisation de l'invention,
- la figure 6 est une vue schématique d'une structure fibreuse conformément à un autre mode de réalisation de l'invention,
- la figure 7 est une vue schématique d'une structure fibreuse conformément à un autre mode de réalisation de l'invention,
- la figure 8 est une vue schématique d'une structure fibreuse conformément à un autre mode de réalisation de l'invention,
- la figure 9 est une vue schématique en perspective d'une aube en matériau composite.

### Description détaillée de modes de réalisation

L'invention s'applique d'une manière générale à la réalisation de structures fibreuses aptes à constituer des renforts fibreux, ou préformes, pour la fabrication de pièces en matériau composite, en particulier des aubes de moteurs aéronautiques, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou céramique dans le cas de composites thermostructuraux.

Comme décrit ci-après en détails, la structure fibreuse selon l'invention comprend une portion d'ébauche formée en une seule pièce par un tissage tridimensionnel entre une pluralité de couches de fils de chaîne et une pluralité de couches de fils de trame, la portion d'ébauche correspondant à tout ou partie d'une préforme de renfort fibreux pour une pièce en matériau composite. Conformément à l'invention, la structure fibreuse comporte, en dehors de la portion d'ébauche, une ou plusieurs couches de tissu bidimensionnel, chaque couche de tissu bidimensionnel regroupant les fils d'une même couche de fils de chaîne et/ou de fils de trame situés en dehors de la portion d'ébauche.

On rappelle que le tissage consiste à entrecroiser des fils de chaîne et des fils de trame. Dans la terminologie du tissage, « armure » désigne le mode d'entrecroisement des fils de chaîne et des fils de trame.

Dans le présent exposé, par « tissage tridimensionnel » (ou « tissage 3D »), on entend désigner un mode de tissage par lequel certains au moins des fils de trame lient des fils de chaîne sur plusieurs couches de trame et inversement. Le tissage tridimensionnel se distingue donc du « tissage bidimensionnel » (ou "tissage 2D") plus classique dans lequel chaque fil de trame, respectivement de chaîne, passe d'un côté à l'autre de fils d'une seule couche de chaîne, respectivement de trame, comme lors du tissage d'une toile ou d'un satin par exemple.

Il existe différents mode de tissage tridimensionnel se distinguant par la manière d'entrecroiser les fils de trame et les fils de chaîne. Par exemple, un tissage tridimensionnel peut être de type "interlock" ou "multicouche". Par "tissage interlock", on entend désigner un tissage 3D avec une armure dont chaque couche de chaîne lie plusieurs couches de trames avec tous les fils de la même colonne de chaîne ayant le même mouvement dans le plan de l'armure.

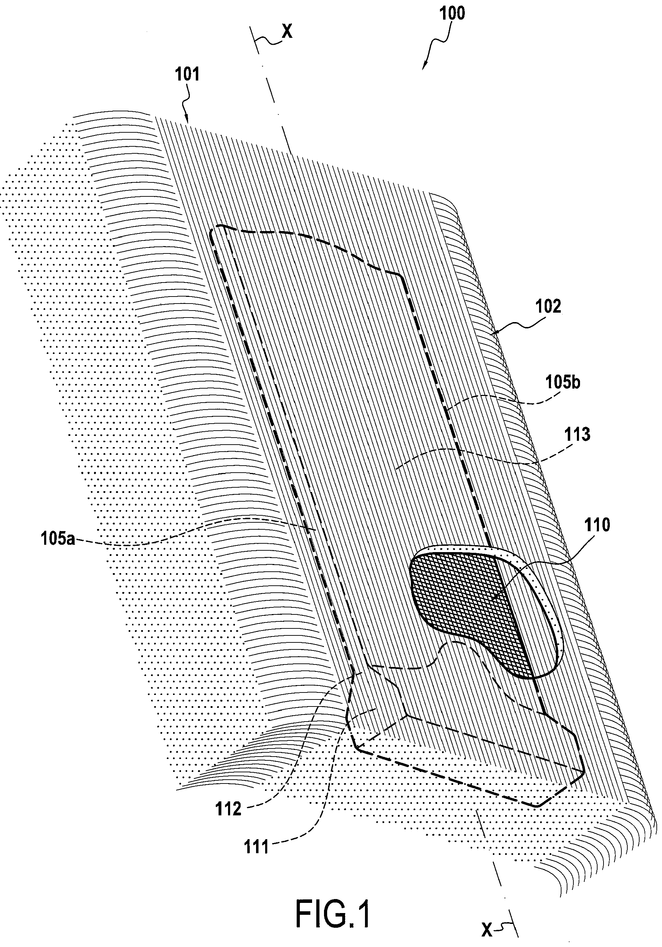

La figure 1 montre très schématiquement une structure fibreuse 100 en sortie de métier à tisser selon l'art antérieur. La structure fibreuse 100 comprend une portion d'ébauche 110 formée en une seule pièce par un tissage tridimensionnel entre une pluralité de couches de fils de chaîne 101 et une pluralité de couches de fils de trame 102, la portion d'ébauche 110 étant destinée à former, après découpe des fils de chaîne et de trame situés en dehors de la portion d'ébauche tissée 3D, le renfort fibreux d'une aube de moteur aéronautique. Dans sa partie destinée à former une préforme de pied, la portion d'ébauche 110 présente une surépaisseur 111 déterminée en fonction de l'épaisseur du pied de l'aube à réaliser. La portion d'ébauche 110 se prolonge par une partie d'épaisseur décroissante 112 destinée à former l'échasse de l'aube puis par une partie 113 destinée à former la pale de l'aube. La partie 113 présente dans une direction perpendiculaire à la direction X un profil à épaisseur variable entre son bord 105a destiné à former le bord d'attaque de l'aube et son bord 105b destiné à former le bord de fuite de l'aube à réaliser.

Des exemples détaillés de réalisation d'une préforme fibreuse destinée à former le renfort fibreux d'une aube pour moteur aéronautique est notamment décrit en détail dans les documents US 7 101154, US 7 241 112 et WO 2010/061140.

La structure fibreuse selon l'invention peut être tissée notamment, mais non exclusivement, à partir de fils de fibres de carbone ou de céramique tel que du carbure de silicium. Le taux de fibres dans la structure fibreuse est déterminé localement en fonction de la densité de fils présents à l'endroit de la structure considéré.

La portion d'ébauche 110 est tissée en une seule pièce et doit présenter, après découpe des fils non tissés situés en dehors de la portion d'ébauche, la forme et les dimensions quasi-définitives de l'aube (« net shape »). A cet effet, dans les parties de réduction d'épaisseur de la structure fibreuse, comme dans la portion d'épaisseur décroissante 112, la diminution d'épaisseur de la préforme est obtenue en retirant progressivement des couches de fils de chaîne et de trame au cours du tissage.

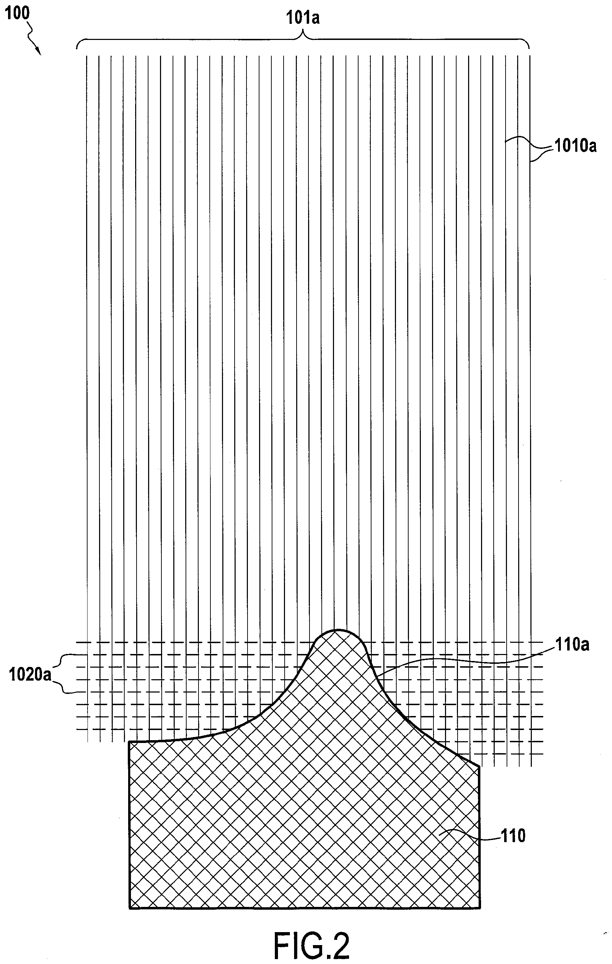

La figure 2 montre la sortie d'une première couche de fils de chaîne 101a en dehors de la portion d'ébauche 110 au début de la portion d'épaisseur décroissante 112. D'autres couches de fils de chaîne (non visibles sur la figure 2) situées en dessous de la première couche de fils de chaîne représentée sur la figure 2 sont progressivement sorties de la portion d'ébauche 110 au fur et à mesure de la formation de la portion d'épaisseur décroissante 112.

En dehors de la portion d'ébauche, située au-delà du contour 110a pour la première couche de fils de chaîne 101a, les fils de chaîne 1010a de la couche 101a ne sont plus tissés. Plus précisément, les fils de trame 1020a situés de chaque côté du contour 110a, ne lient plus les fils de chaîne de la couche 101a et sont laissés lâches en dessous de la couche 101a. Au-delà du contour 110a, c'est-à-dire après la sortie totale de la couche 101a de la portion d'ébauche, il n'y a plus de fils de trame car le métier à tisser à cesser d'être alimenté avec les fils de trame de la couche de fils de trame destinée à lier les fils de chaîne 1010a de la couche 101a dans la portion d'ébauche.

Afin d'extraire la préforme du renfort fibreux d'aube de la structure fibreuse 100, il faut procéder à une découpe de tous les fils non tissés situés en dehors de la portion d'ébauche 110. Avec la texture fibreuse de la figure 1, la découpe des fils de chaque couche de fils de chaîne et de chaque couche de fils de trame est délicate et fastidieuse en raison de l'absence de cohésion entre les fils non tissés issus d'une même couche. En effet, afin de réaliser une découpe au plus près du contour de la portion d'ébauche sans endommager cette dernière, il est préférable de découper les fils couche par couche en commençant par la couche présente en surface de la structure et en poursuivant avec les couches sous-jacentes. Cette découpe couche par couche nécessite l'intervention manuelle d'un opérateur qui saisit et découpe un par un les fils d'une même couche.

Afin de faciliter la découpe des fils non tissés situés en dehors de la portion d'ébauche, l'invention propose de lier entre eux par tissage bidimensionnel les fils non tissés d'une même couche. Ainsi, les fils d'une même couche situés en dehors de la portion d'ébauche peuvent être facilement manipulés et découpés de façon précise et rapide. Selon l'invention, les fils d'une même couche (couche de fils de chaîne ou couche de fils de trame) situés en dehors de la portion d'ébauche sont tissés suivant un tissage bidimensionnel, immédiatement après leur sortie de la portion d'ébauche ou à une distance déterminée de leur point de sortie de la portion d'ébauche. Par conséquent, les fils d'une même couche de fils (couche de fils de chaîne ou couche de fils de trame) sont successivement tissés suivant un tissage tridimensionnel lorsqu'ils sont dans la portion d'ébauche et suivant un tissage bidimensionnel lorsqu'ils sont en dehors de la portion d'ébauche.

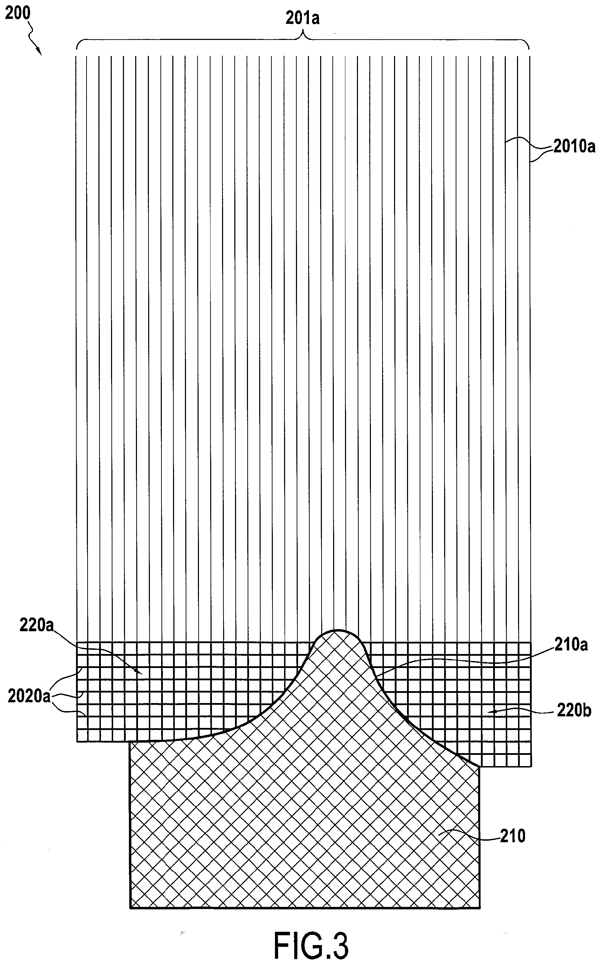

La figure 3 représente un premier exemple de mise en oeuvre de l'invention avec une structure fibreuse 200 similaire à la structure 100 précédemment décrite. La structure fibreuse 200 diffère de la structure 100 de la figure 2 en ce que les fils de chaîne 2010a de la première couche de fils de chaîne 201a sont tissés dès leur sortie de la portion d'ébauche suivant un tissage bidimensionnel avec les fils de trame 2020a utilisés dans la portion d'ébauche 210. On obtient ainsi deux couches de tissus bidimensionnel 220a et 220b, par exemple une toile ou satin, respectivement disposées de chaque côté de l'extrémité 210a de la portion d'ébauche 210. Les couches 220a et 220b permettent une saisie aisée et, par conséquent, une découpe rapide et précise des fils de chaîne 2010a de la première couche de fils de chaîne 201a non tissés dans la portion d'ébauche 210. Des couches bidimensionnelles sont également réalisées de la même façon avec les fils de chaîne non tissés des couches de fils de chaîne inférieures (non représentées sur la figure 3).

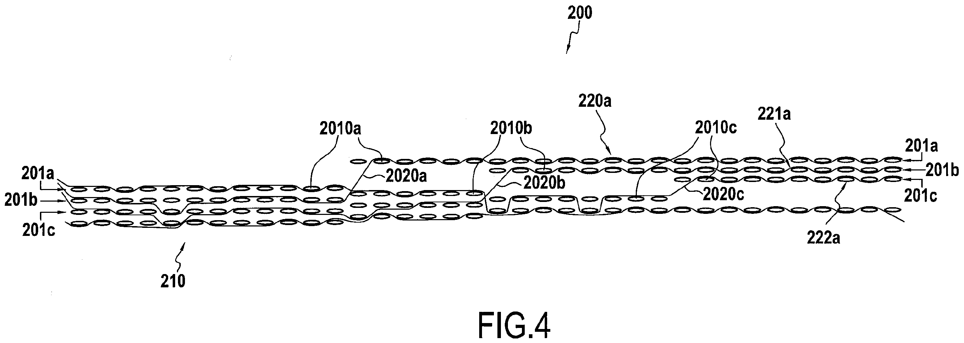

La figure 4 représente un plan d'armure d'une partie de la structure fibreuse 200, les fils de chaîne étant visibles en coupe. La figure 4 illustre les sorties successives des trois premières couches de fils de chaîne 201a, 201b et 201c de la portion d'ébauche 210. Les fils de chaîne 2010a de la couche 201a situés en dehors de la portion d'ébauche 210 sont tissés avec des fils de trame 2020a utilisés pour lier entre elles plusieurs couches de fils de chaîne dans la portion d'ébauche 210 de manière à former une couche de tissu bidimensionnel 220a. De même, les fils de chaîne 2010b de la couche 201b situés en dehors de la portion d'ébauche 210 sont tissés avec des fils de trame 2020b issus de la portion d'ébauche 210 de manière à former une couche de tissu bidimensionnel 221a. Enfin, les fils de chaîne 2010c de la couche 201c situés en dehors de la portion d'ébauche 210 sont tissés avec des fils de trame 2020c issus de la portion d'ébauche 210 de manière à former une couche de tissu bidimensionnel 222a.

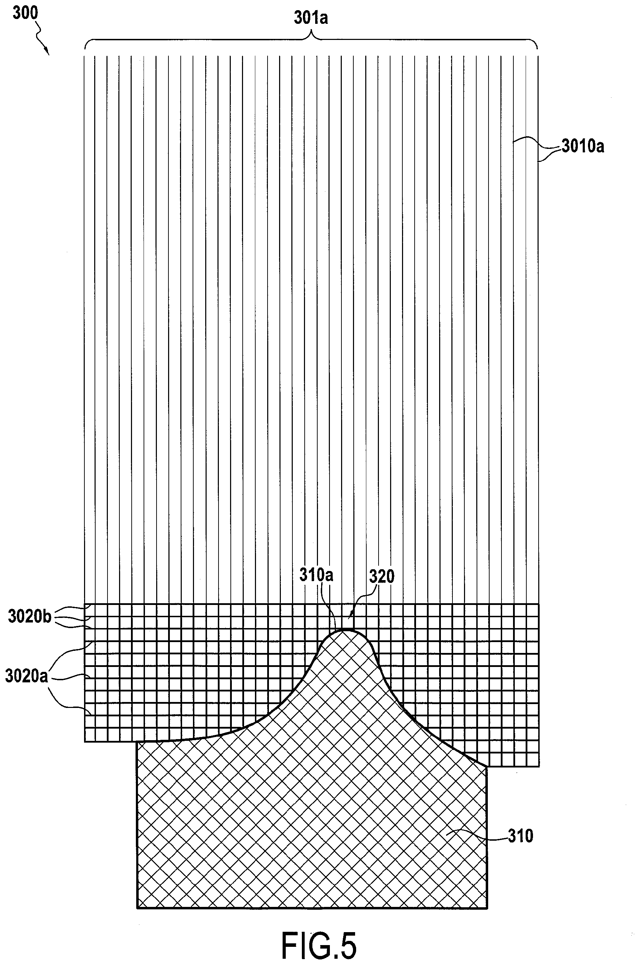

Selon une variante illustrée sur la figure 5, une structure fibreuse 300 diffère de la structure 200 de la figure 3 en ce que des fils de trame supplémentaires 3020b sont utilisés pour lier, par tissage bidimensionnel, les fils de chaîne 3010a de la première couche de fils de chaîne 301a au-delà de l'extrémité 310a de la portion d'ébauche 310, les fils de chaîne 3010a situés de chaque côté de la portion d'ébauche 310 étant liés par tissage bidimensionnel avec les fils de trame 3020a utilisés pour tisser la portion d'ébauche 310. On obtient ainsi une couche de tissu bidimensionnel 320 qui s'étend à la fois de chaque côté de la portion d'ébauche 310 et au-delà de l'extrémité 310a de cette dernière. Les fils de chaîne non tissés de chaque couche de fils de chaîne située en dessous de la couche 301a peuvent être liés par tissage bidimensionnel avec des fils de trame de la même manière que pour les fils de chaîne non tissés de la couche de fils de chaîne 301a. L'utilisation de fils de trame supplémentaires au-delà de la portion d'ébauche permettent de lier par tissage bidimensionnel les fils de chaîne non tissés d'une même couche de fils de chaîne sur toute la largeur de la structure fibreuse dans le sens trame, les fils de chaîne ainsi tissés peuvent être saisis et manipulés tous ensemble.

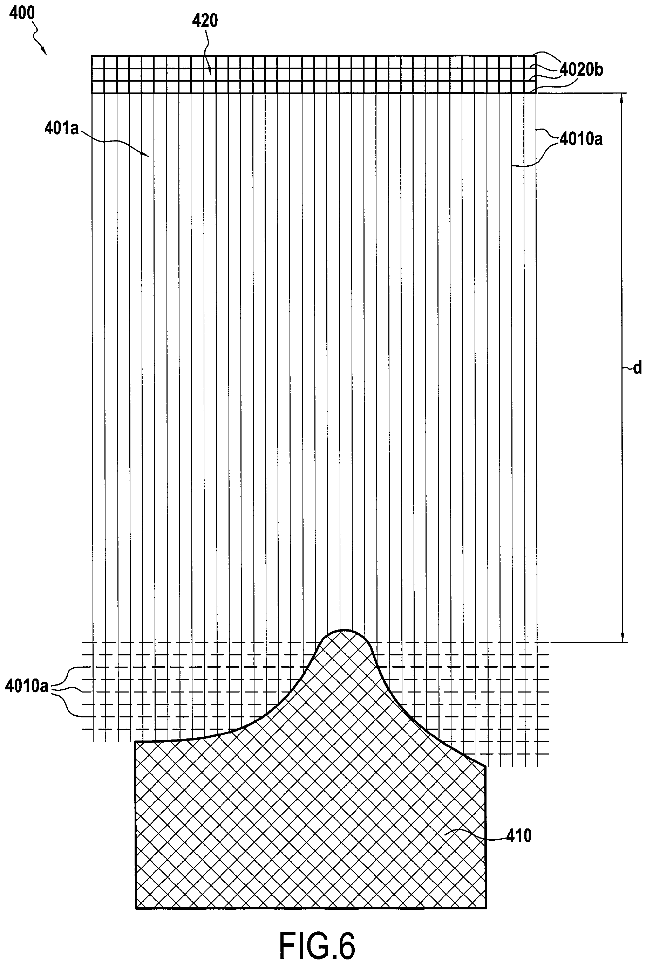

La figure 6 représente un autre mode de mise en oeuvre de l'invention avec une structure fibreuse 400 similaire à la structure 100 précédemment décrite. La structure fibreuse 400 diffère de la structure 100 de la figure 2 en ce que les fils de chaîne 4010a de la première couche de fils de chaîne 401a situés en dehors de la portion d'ébauche 410 sont liés par tissage bidimensionnel après avoir tissé intégralement la portion d'ébauche 410. A cet effet, des fils de trame supplémentaires 4020b sont ajoutés par rapport à fils de trame 4020a prévus dans le programme de tissage de la portion d'ébauche 410 de manière à lier par tissage bidimensionnel les fils de chaîne non tissés 4010a de la couche 401a au niveau d'une zone éloignée de la sortie de la portion d'ébauche 410. On obtient ainsi une couche de tissu bidimensionnel 420 qui est située à une distance déterminée d de la portion d'ébauche. Les fils de chaîne non tissés de chaque couche de fils de chaîne située en dessous de la couche 401a peuvent être regroupés par tissage bidimensionnel avec des fils de trame supplémentaires de la même manière que pour les fils de chaîne non tissés de la couche de fils de chaîne 401a. Le regroupement en une couche de tissu bidimensionnel des fils de chaîne non tissés de chaque couches de fils de chaîne permet une saisie aisée et, par conséquent, une découpe rapide et précise des fils de chaîne de chaque couche de fils de chaîne non tissés dans la portion d'ébauche 410.

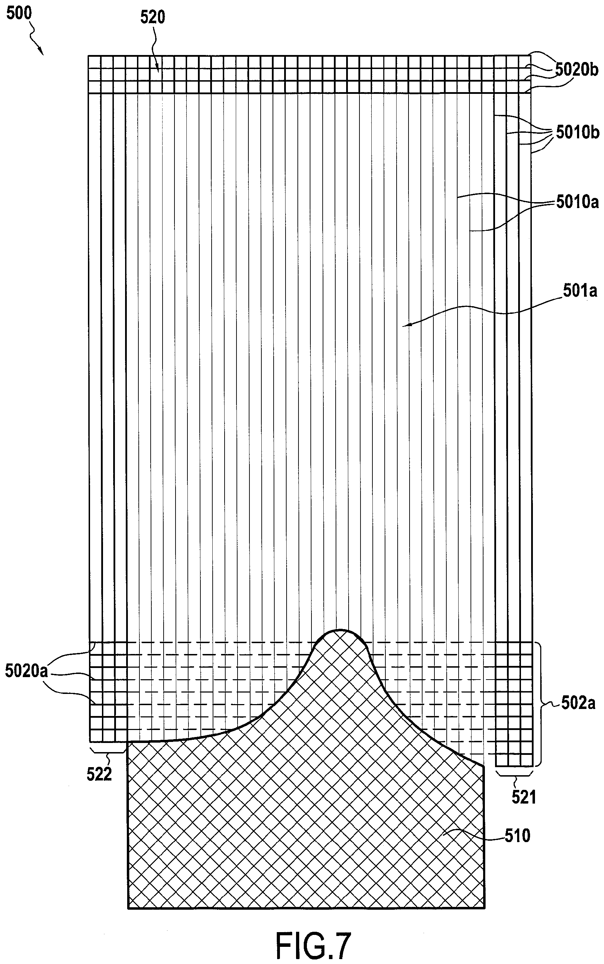

Selon une variante illustrée sur la figure 7, une structure fibreuse 500 diffère de la structure 400 de la figure 6 en ce que des fils de chaîne supplémentaires 5010b sont utilisés en lisière de la structure fibreuse 500 pour lier, par tissage bidimensionnel, les fils de trame 5020a de la première couche de fils de trame 502a utilisés pour former la portion d'ébauche 510, d'une part, et d'autre part, les fils de trame supplémentaires 5020b ajoutés par rapport à ceux prévus dans le programme de tissage de la portion d'ébauche pour lier par tissage bidimensionnel les fils de chaîne non tissés 5010a de la couche 501a au niveau d'une zone éloignée de la sortie de la portion d'ébauche 510. On obtient ainsi une couche de tissu bidimensionnel 520 qui est située à une distance déterminée de la portion d'ébauche et deux couches de tissu bidimensionnel 521 et 522 qui s'étendent respectivement sur les bords longitudinaux en lisière de la texture. Les fils de trame et de chaîne non tissés des couches inférieures peuvent être regroupés par tissage bidimensionnel de la même manière.

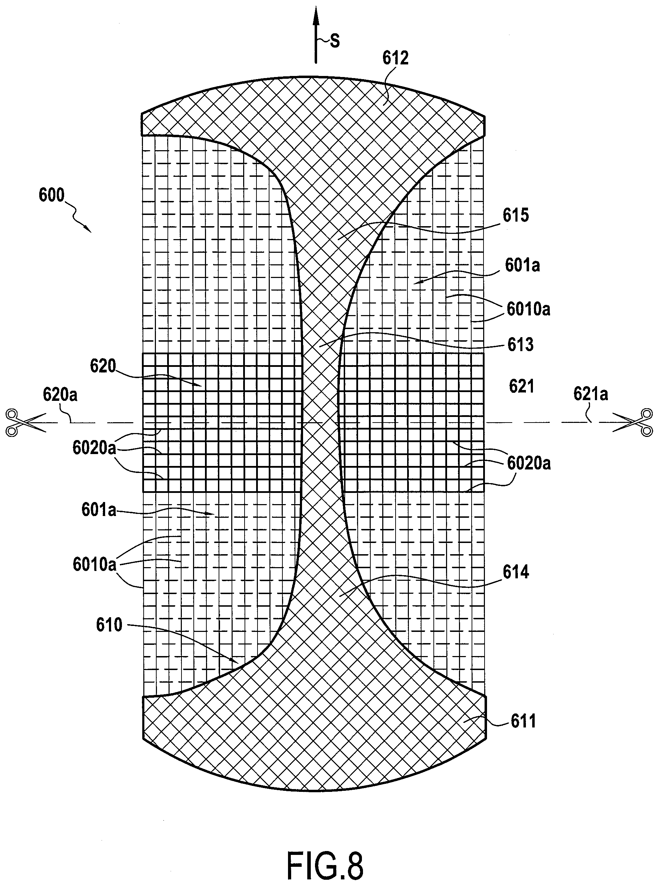

La figure 8 représente un autre mode de mise en oeuvre de l'invention avec une structure fibreuse 600 dont la portion d'ébauche 610 comprend à ses extrémités deux parties de forte épaisseur 611 et 612 destinées par exemple à former respectivement des plateformes d'aube et une partie centrale de faible épaisseur 613 destinée à former la pale de l'aube. Dans le sens S du tissage, la portion débauche 610 présente une partie d'épaisseur décroissante 614 au niveau de la transition entre la partie de forte épaisseur 611 et la partie de faible épaisseur 613 ainsi qu'une partie d'épaisseur croissante 615 au niveau de la transition entre la partie de faible épaisseur 613 et la partie de forte épaisseur 612. Des fils de chaîne 6010a de la première couche de fils de chaîne 601a sont extraits de la portion d'ébauche 610 au niveau de la partie d'épaisseur décroissante 614 et réintroduits dans la portion d'ébauche au niveau de la partie d'épaisseur croissante 615. Il en est de même pour les fils de chaîne des couches de fils de chaînes inférieures (non représentées sur la figure 8). Conformément à l'invention et afin de regrouper les fils de chaîne de la couche 601a qui sont extraits de la portion d'ébauche 610 entre les parties 611 et 612, deux couches de tissu bidimensionnel 620 et 621 sont réalisées respectivement de chaque côté de la partie de faible épaisseur avec les fils de trame 6020a utilisés pour réaliser la portion d'ébauche 610. Afin de faciliter la manipulation et la découpe des fils de chaîne situés en dehors de la portion d'ébauche 610, chaque couche de tissu bidimensionnel 620 et 621 peut être découpée suivant une ligne 620a et 621a. Selon une variante de mise en oeuvre, des fils de chaîne supplémentaires (non représentés sur la figure 8) peuvent être utilisés en lisière de la structure fibreuse pour lier, par tissage bidimensionnel, les fils de trame de la première couche de fils de trame utilisés pour former la portion d'ébauche 610 comme avec la structure fibreuse 500 de la figure 7.

Une fois le tissage de la structure fibreuse achevé, on extrait la portion d'ébauche de la structure fibreuse par découpe des non tissés en procédant à une découpe de fils couche par couche conformément à l'invention de manière à obtenir une préforme fibreuse destinée ici à former le renfort fibreux d'une aube.

On procède ensuite à la densification de la préforme fibreuse afin de former une aube en matériau composite. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

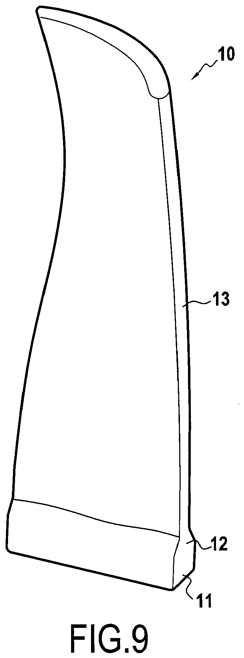

Après densification, on obtient une aube 10 en matériau composite qui, comme illustrée sur la figure 9, comporte dans sa partie inférieure un pied 11 qui se prolonge par une échasse 12 et une pale 13.

## Revendications

1. Structure fibreuse (200) comprenant une portion d'ébauche (210) formée en une seule pièce par un tissage tridimensionnel entre une première pluralité de couches de fils et une deuxième pluralité de couches de fils, ladite portion d'ébauche correspondant à tout ou partie d'une préforme de renfort fibreux pour une pièce en matériau composite,
**caractérisée en ce qu'**elle comporte une ou plusieurs couches de tissu bidimensionnel (220a, 220b), chaque couche de tissu bidimensionnel regroupant des fils (2010a) d'une seule et même couche (201a) appartenant au moins à la première pluralité de couches de fils après leur sortie de la portion d'ébauche (210) et **en ce que** chaque couche de tissu bidimensionnel s'étend en dehors de la portion d'ébauche dans la direction des fils de la couche de la première pluralité de couches de fils regroupés dans ladite couche de tissu bidimensionnel.

2. Structure fibreuse selon la revendication 1, **caractérisée en ce que** les fils (2010a) de la première pluralité de couches de fils correspondent à des fils de chaîne tandis que les fils (2020a) de la deuxième pluralité de couches de fils correspondent à des fils de trame, et **en ce que** chaque couche de tissu bidimensionnel (220a ; 220b) est adjacente à la portion d'ébauche (210).

3. Structure selon la revendication 2, **caractérisée en ce que**, dans chaque couche de tissu bidimensionnel (220a ; 220b), les fils (2010a) de la même couche de fils de chaîne sont tissés avec les fils (2020a) d'une même couche de fils de trame.

4. Structure selon la revendication 1, **caractérisée en ce que** chaque couche de tissu bidimensionnel (420) est située à une distance déterminée de la portion d'ébauche.

5. Structure selon la revendication 4, **caractérisée en ce que** ladite structure comprend des couches de tissu bidimensionnel (521, 522) regroupant les fils de trame (5020a) extraits de la portion d'ébauche (510) et appartenant à une même couche de fils de trame (502a).

6. Structure selon la revendication 1, **caractérisée en ce que** les fils de la première pluralité de couches de fils correspondent à des fils de chaîne (6010a) tandis que les fils de la deuxième pluralité de couches de fils correspondent à des fils de trame (6020a), la portion d'ébauche (610) comprenant une partie d'épaisseur décroissante (614) et une partie d'épaisseur croissante (615), des fils de chaîne (6010a) étant extraits de la portion d'ébauche (610) au niveau de la partie d'épaisseur décroissante (614) et réintroduits dans la portion d'ébauche au niveau de la partie d'épaisseur croissante (615), et **en ce que** ladite structure comprend des couches de tissu bidimensionnel (620, 621) regroupant les fils de chaîne (6010a) extraits de la portion d'ébauche et appartenant à une même couche de fils de chaîne (601a).

7. Structure selon la revendication 1, **caractérisée en ce que** les fils de la première pluralité de couches de fils correspondent à des fils de chaîne tandis que les fils de la deuxième pluralité de couches de fils correspondent à des fils de trame, la portion d'ébauche comprenant une partie d'épaisseur décroissante (112) et une partie d'épaisseur croissante, (111) des fils de trame (102) étant extraits de la portion d'ébauche au niveau de la partie d'épaisseur décroissante (111) et réintroduits dans la portion d'ébauche au niveau de la partie d'épaisseur croissante, et **en ce que** ladite structure comprend des couches de tissu bidimensionnel (220a,220b) regroupant les fils de trame extraits de la portion d'ébauche et appartenant à une même couche de fils de trame.

8. Structure selon la revendication 6 ou 7, **caractérisée en ce que** chaque couche de tissu bidimensionnel (620 ; 621) comporte une découpe (620a ; 621a) orientée perpendiculairement par rapport à la direction des fils de la première pluralité de couches.

9. Procédé de fabrication d'une structure fibreuse comprenant le tissage en une seule pièce d'une portion d'ébauche (210) par tissage tridimensionnel entre une première pluralité de couches de fils et une deuxième pluralité de couches de fils, ladite portion d'ébauche correspondant à tout ou partie d'une préforme de renfort fibreux pour une pièce en matériau composite,
**caractérisé en ce qu'**il comprend en outre le tissage, en dehors de la portion d'ébauche (210), d'une ou plusieurs couches de tissu bidimensionnel (220a, 220b), chaque couche de tissu bidimensionnel regroupant des fils (2010a) d'une seule et même couche (201a) appartenant au moins à la première pluralité de couches de fils après leur sortie de la portion d'ébauche (210) et **en ce que** chaque couche de tissu bidimensionnel s'étend en dehors de la portion d'ébauche dans la direction des fils de la couche de la première pluralité de couches de fils regroupés dans ladite couche de tissu bidimensionnel.

10. Procédé selon la revendication 9, **caractérisé en ce que** les fils de la première pluralité de couches de fils (2010a) correspondent à des fils de chaîne tandis que les fils de la deuxième pluralité de couches de fils (2010b) correspondent à des fils de trame, et **en ce que** chaque couche de tissu bidimensionnel (220a, 220b) est tissée de manière adjacente à la portion d'ébauche (210).

11. Procédé selon la revendication 10, **caractérisé en ce que**, dans chaque couche de tissu bidimensionnel (220a ; 220b), les fils (2010a) de la même couche de fils de chaîne (201a) sont tissés avec les fils (2020a) d'une même couche de fils de trame.

12. Procédé selon la revendication 9, **caractérisé en ce que** chaque couche de tissu bidimensionnel (420) est tissée à une distance déterminée de la portion d'ébauche.

13. Procédé selon la revendication 9, **caractérisé en ce que** les fils de la première pluralité de couches de fils correspondent à des fils de chaîne (6010a) tandis que les fils de la deuxième pluralité de couches de fils correspondent à des fils de trame (6020a), la portion d'ébauche (620) comprenant une partie d'épaisseur décroissante (614) et une partie d'épaisseur croissante (615), des fils de chaîne (6010a) étant extraits de la portion d'ébauche (610) au niveau de la partie d'épaisseur décroissante (614) et réintroduits dans la portion d'ébauche au niveau de la partie d'épaisseur croissante (615), et **en ce que** ledit procédé comprend le tissage de couches de tissu bidimensionnel (620, 621) regroupant les fils de chaîne (6010a) extraits de la portion d'ébauche (610) et appartenant à une même couche de fils de chaîne (601a).

14. Procédé selon la revendication 9, **caractérisé en ce que** les fils de la première pluralité de couches de fils (2010a) correspondent à des fils de chaîne tandis que les fils (2020a) de la deuxième pluralité de couches de fils correspondent à des fils de trame, la portion d'ébauche comprenant une partie d'épaisseur décroissante (112) et une partie d'épaisseur croissante, (111) des fils de trame étant extraits de la portion d'ébauche au niveau de la partie d'épaisseur décroissante (112) et réintroduits dans la portion d'ébauche au niveau de la partie d'épaisseur croissante, (111) et **en ce que** ledit procédé comprend le tissage de couches de tissu bidimensionnel (220a,220b) regroupant les fils de trame extraits de la portion d'ébauche et appartenant à une même couche de fils de trame.

15. Procédé selon la revendication 13 ou 14, **caractérisé en ce qu'**il comprend en outre la formation d'une découpe (620a ; 621a) dans chaque couche de tissu bidimensionnel (620 ; 621), la découpe étant orientée perpendiculairement par rapport à la direction des fils de la première pluralité de couches.

16. Procédé de réalisation d'une préforme de renfort fibreux **caractérisé en ce qu'**il comprend les étapes suivantes :
- fabrication d'une texture fibreuse selon l'une quelconque des revendications 9 à 15,
- la saisie de chaque couche de tissu bidimensionnel et la découpe des fils de chaque couche de tissu bidimensionnel à la limite de la ou les portions d'ébauche de la structure fibreuse.

## Patentansprüche

1. Faserstruktur (200), umfassend einen Rohlingabschnitt (210), der durch ein dreidimensionales Weben zwischen einer ersten Vielzahl von Fadenlagen und einer zweiten Vielzahl von Fadenlagen einstückig gebildet ist, wobei der Rohlingabschnitt einem ganzen Vorformling einer Faserverstärkung für ein Teil aus Verbundwerkstoff oder einem Teil dessen entspricht,
**dadurch gekennzeichnet, dass** sie eine oder mehrere Lagen aus zweidimensionalem Gewebe (220a, 220b) umfasst, wobei jede Lage aus zweidimensionalem Gewebe Fäden (2010a) ein und derselben Lage (201a), welche wenigstens zu der ersten Vielzahl von Fadenlagen gehört, nach ihrem Austritt aus dem Rohlingabschnitt (210) zusammenfasst, und dass jede Lage aus zweidimensionalem Gewebe außerhalb des Rohlingabschnittes in der Richtung der Fäden der Lage der ersten Vielzahl von Lagen aus Fäden, die in der Lage aus zweidimensionalem Gewebe zusammengefasst sind, verläuft.

2. Faserstruktur nach Anspruch 1, **dadurch gekennzeichnet, dass** die Fäden (2010a) der ersten Vielzahl von Fadenlagen Kettfäden entsprechen, während die Fäden (2020a) der zweiten Vielzahl von Fadenlagen Schussfäden entsprechen, und dass jede Lage aus zweidimensionalem Gewebe (220a; 220b) zu dem Rohlingabschnitt (210) benachbart ist.

3. Struktur nach Anspruch 2, **dadurch gekennzeichnet, dass** in jeder Lage aus zweidimensionalem Gewebe (220a; 220b) die Fäden (2010a) der gleichen Kettfadenlage mit den Fäden (2020a) einer gleichen Schussfadenlage verwebt sind.

4. Struktur nach Anspruch 1, **dadurch gekennzeichnet, dass** jede Lage aus zweidimensionalem Gewebe (420) in einem bestimmten Abstand von dem Rohlingabschnitt gelegen ist.

5. Struktur nach Anspruch 4, **dadurch gekennzeichnet, dass** die Struktur Lagen aus zweidimensionalem Gewebe (521, 522) umfasst, welche die Schussfäden (5020a), die aus dem Rohlingabschnitt (510) herausgezogen sind und zu einer gleichen Schussfadenlage (502a) gehören, zusammenfassen.

6. Struktur nach Anspruch 1, **dadurch gekennzeichnet, dass** die Fäden der ersten Vielzahl von Fadenlagen Kettfäden (6010a) entsprechen, während die Fäden der zweiten Vielzahl von Fadenlagen Schussfäden (6020a) entsprechen, wobei der Rohlingabschnitt (610) einen Teil mit abnehmender Dicke (614) und einen Teil mit zunehmender Dicke (615) umfasst, wobei Kettfäden (6010a) im Bereich des Teils mit abnehmender Dicke (614) aus dem Rohlingabschnitt (610) herausgezogen sind und im Bereich des Teils mit zunehmender Dicke (615) wieder in den Rohlingabschnitt eingeführt sind, und dass die Struktur Lagen aus zweidimensionalem Gewebe (620, 621) umfasst, die die Kettfäden (6010a), welche aus dem Rohlingabschnitt herausgezogen sind und zu einer gleichen Kettfadenlage (601a) gehören, zusammenfassen.

7. Struktur nach Anspruch 1, **dadurch gekennzeichnet, dass** die Fäden der ersten Vielzahl von Fadenlagen Kettfäden entsprechen, während die Fäden der zweiten Vielzahl von Fadenlagen Schussfäden entsprechen, wobei der Rohlingabschnitt einen Teil mit abnehmender Dicke (112) und einen Teil mit zunehmender Dicke (111) umfasst, wobei Schussfäden (102) im Bereich des Teils mit abnehmender Dicke (112) aus dem Rohlingabschnitt herausgezogen sind und im Bereich des Teils mit zunehmender Dicke wieder in den Rohlingabschnitt eingeführt sind, und dass die Struktur Lagen aus zweidimensionalem Gewebe (220a, 220b) umfasst, die die Schussfäden, welche aus dem Rohlingabschnitt herausgezogen sind und zu einer gleichen Schussfadenlage gehören, zusammenfassen.

8. Struktur nach Anspruch 6 oder 7, **dadurch gekennzeichnet, dass** jede Lage aus zweidimensionalem Gewebe (620; 621) einen Ausschnitt (620a; 621a), der senkrecht zu der Richtung der Fäden der ersten Vielzahl von Lagen ausgerichtet ist, umfasst.

9. Verfahren zur Herstellung einer Faserstruktur, das das einstückige Weben eines Rohlingabschnittes (210) durch dreidimensionales Weben zwischen einer ersten Vielzahl von Fadenlagen und einer zweiten Vielzahl von Fadenlagen umfasst, wobei der Rohlingabschnitt einem ganzen Vorformling einer Faserverstärkung für ein Teil aus Verbundwerkstoff oder einem Teil dessen entspricht,
**dadurch gekennzeichnet, dass** es ferner das Weben von einer oder mehreren Lagen aus zweidimensionalem Gewebe (220a, 220b) außerhalb des Rohlingabschnittes (210) umfasst, wobei jede Lage aus zweidimensionalem Gewebe Fäden (2010a) ein und derselben Lage (201a), welche wenigstens zu der ersten Vielzahl von Fadenlagen gehört, nach ihrem Austritt aus dem Rohlingabschnitt (210) zusammenfasst, und dass jede Lage aus zweidimensionalem Gewebe außerhalb des Rohlingabschnittes in der Richtung der Fäden der Lage der ersten Vielzahl von Lagen aus Fäden, die in der Lage aus zweidimensionalem Gewebe zusammengefasst sind, verläuft.

10. Verfahren nach Anspruch 9, **dadurch gekennzeichnet, dass** die Fäden der ersten Vielzahl von Fadenlagen (2010a) Kettfäden entsprechen, während die Fäden der zweiten Vielzahl von Fadenlagen (2010b) Schussfäden entsprechen, und dass jede Lage aus zweidimensionalem Gewebe (220a, 220b) zu dem Rohlingabschnitt (210) benachbart gewebt ist.

11. Verfahren nach Anspruch 10, **dadurch gekennzeichnet, dass** in jeder Lage aus zweidimensionalem Gewebe (220a; 220b) die Fäden (2010a) der gleichen Kettfadenlage (201a) mit den Fäden (2020a) einer gleichen Schussfadenlage verwebt sind.

12. Verfahren nach Anspruch 9, **dadurch gekennzeichnet, dass** jede Lage aus zweidimensionalem Gewebe (420) in einem bestimmten Abstand von dem Rohlingabschnitt gewebt ist.

13. Verfahren nach Anspruch 9, **dadurch gekennzeichnet, dass** die Fäden der ersten Vielzahl von Fadenlagen Kettfäden (6010a) entsprechen, während die Fäden der zweiten Vielzahl von Fadenlagen Schussfäden (6020a) entsprechen, wobei der Rohlingabschnitt (610) einen Teil mit abnehmender Dicke (614) und einen Teil mit zunehmender Dicke (615) umfasst, wobei Kettfäden (6010a) im Bereich des Teils mit abnehmender Dicke (614) aus dem Rohlingabschnitt (610) herausgezogen sind und im Bereich des Teils mit zunehmender Dicke (615) wieder in den Rohlingabschnitt eingeführt sind, und dass das Verfahren das Weben von Lagen aus zweidimensionalem Gewebe (620, 621) umfasst, die die Kettfäden (6010a), welche aus dem Rohlingabschnitt (610) herausgezogen sind und zu einer gleichen Kettfadenlage (601a) gehören, zusammenfassen.

14. Verfahren nach Anspruch 9, **dadurch gekennzeichnet, dass** die Fäden der ersten Vielzahl von Fadenlagen (2010a) Kettfäden entsprechen, während die Fäden (2020a) der zweiten Vielzahl von Fadenlagen Schussfäden entsprechen, wobei der Rohlingabschnitt einen Teil mit abnehmender Dicke (112) und einen Teil mit zunehmender Dicke (111) umfasst, wobei Schussfäden im Bereich des Teils mit abnehmender Dicke (112) aus dem Rohlingabschnitt herausgezogen sind und im Bereich des Teils mit zunehmender Dicke (111) wieder in den Rohlingabschnitt eingeführt sind, und dass das Verfahren das Weben von Lagen aus zweidimensionalem Gewebe (220a, 220b) umfasst, die die Schussfäden, welche aus dem Rohlingabschnitt herausgezogen sind und zu einer gleichen Schussfadenlage gehören, zusammenfassen.

15. Verfahren nach Anspruch 13 oder 14, **dadurch gekennzeichnet, dass** es ferner die Bildung eines Ausschnitts (620a; 621a) in jeder Lage aus zweidimensionalem Gewebe (620; 621) umfasst, wobei der Ausschnitt senkrecht zu der Richtung der Fäden der ersten Vielzahl von Lagen ausgerichtet ist.

16. Verfahren zur Herstellung eines Vorformlings einer Faserverstärkung, **dadurch gekennzeichnet, dass** es die folgenden Schritte umfasst:
- Herstellen einer Faserstruktur nach einem der Ansprüche 9 bis 15,
- das Erfassen einer jeden Lage aus zweidimensionalem Gewebe und das Abschneiden der Fäden einer jeden Lage aus zweidimensionalem Gewebe an der Grenze des oder der Rohlingabschnitte der Faserstruktur.

## Claims

1. A fiber structure (200) comprising a blank portion (210) formed as a single part by three-dimensional weaving between a first plurality of yarn layers and a second plurality of yarn layers, said blank portion corresponding to all or part of a fiber reinforcement preform for a part made of composite material, the structure being **characterized in that** it comprises one or more two-dimensional fabric layers (220a, 220b), each two-dimensional fabric layer grouping together yarns (2010a) of a single layer (201a) forming part at least of the first plurality of yarn layers after they have exited the blank portion (210), and **in that** each two-dimensional fabric layer extends outside the blank portion in the direction of the yarns of the layer of the first plurality of yarn layers grouped together in said two-dimensional fabric layer.

2. A fiber structure according to claim 1, **characterized in that** the yarns (2010a) of the first plurality of yarn layers correspond to warp yarns, whereas the yarns (2020a) of the second plurality of yarn layers correspond to weft yarns, and **in that** each two-dimensional fabric layer (220a; 220b) is adjacent to the blank portion (210).

3. A fiber structure according to claim 2, **characterized in that**, within each two-dimensional fabric layer (220a; 220b) the yarns (2010a) of a single layer of warp yarns are woven together with the yarns (2020a) of a single layer of weft yarns.

4. A structure according to claim 1, **characterized in that** each two-dimensional fabric layer (420) is situated at a determined distance from the blank portion.

5. A structure according to claim 4, **characterized in that** said structure comprises two-dimensional fabric layers (521, 522) grouping together weft yarns (5020a) extracted from the blank portion (510) and belonging to a single layer of weft yarns (502a).

6. A structure according to claim 1, **characterized in that** the yarns of the first plurality of yarn layers correspond to warp yarns (6010a) whereas the yarns of the second plurality of yarn layers correspond to weft yarns (6020a), the blank portion (610) including a portion of decreasing thickness (614) and a portion of increasing thickness (615), warp yarns (6010a) being extracted from the blank portion (610) via the portion of decreasing thickness (614) and being reinserted into the blank portion via the portion of increasing thickness (615), and **in that** said structure includes two-dimensional fabric layers (620, 621) grouping together the warp yarns (6010a) extracted from the blank portion and belonging to a single layer of warp yarns (601a).

7. A structure according to claim 1, **characterized in that** the yarns of the first plurality of yarn layers correspond to warp yarns whereas the yarns of the second plurality of yarn layers correspond to weft yarns, the blank portion including a portion of decreasing thickness (112) and a portion of increasing thickness (111), weft yarns (102) being extracted from the blank portion via the portion of decreasing thickness (112) and being reinserted into the blank portion via the portion of increasing thickness, and **in that** said structure includes two-dimensional fabric layers (220a, 220b) grouping together the weft yarns extracted from the blank portion and belonging to a single layer of weft yarns.

8. A structure according to claim 6 or claim 7, **characterized in that** each two-dimensional fabric layer (620; 621) includes a cutout (620a; 621a) oriented perpendicularly relative to the direction of the yarns of the first plurality of layers.

9. A method of fabricating a fiber structure comprising weaving as a single part of a blank portion (210) by three-dimensional weaving between a first plurality of yarn layers and a second plurality of yarn layers, said blank portion corresponding to all or part of a fiber reinforcement preform for a part made of composite material, the method being **characterized in that** it further comprises, outside the blank portion (210), weaving one or more two-dimensional fabric layers (220a, 220b), each two-dimensional fabric layer grouping together yarns (2010a) of a single layer (201a) forming part at least of the first plurality of yarn layers after they have exited the blank portion (210), and **in that** each two-dimensional fabric layer extends outside the blank portion in the direction of the yarns of the layer of the first plurality of yarn layers grouped together in said two-dimensional fabric layer.

10. A method according to claim 9, **characterized in that** the yarns of the first plurality of yarn layers (2010a) correspond to warp yarns, whereas the yarns of the second plurality of yarn layers (2010b) correspond to weft yarns, and **in that** each two-dimensional fabric layer (220a; 220b) is woven adjacent to the blank portion (210).

11. A method according to claim 10, **characterized in that**, within each two-dimensional fabric layer (220a; 220b) the yarns (2010a) of a single layer of warp yarns (201a) are woven together with the yarns (2020a) of a single layer of weft yarns.

12. A method according to claim 9, **characterized in that** each two-dimensional fabric layer (420) is woven at a determined distance from the blank portion.

13. A method according to claim 9, **characterized in that** the yarns of the first plurality of yarn layers correspond to warp yarns (6010a) whereas the yarns of the second plurality of yarn layers correspond to weft yarns (6020a), the blank portion (620) including a portion of decreasing thickness (614) and a portion of increasing thickness (615), warp yarns (6010a) being extracted from the blank portion (610) via the portion of decreasing thickness (614) and being reinserted into the blank portion via the portion of increasing thickness (615), and **in that** said method comprises weaving two-dimensional fabric layers (620, 621) grouping together the warp yarns (6010a) extracted from the blank portion (610) and belonging to a single layer of warp yarns (601a).

14. A method according to claim 9, **characterized in that** the yarns of the first plurality of yarn layers correspond to warp yarns whereas the yarns of the second plurality of yarn layers correspond to weft yarns, the blank portion including a portion of decreasing thickness (112) and a portion of increasing thickness (111), weft yarns being extracted from the blank portion via the portion of decreasing thickness (112) and being reinserted into the blank portion via the portion of increasing thickness (111), and **in that** said method comprises weaving two-dimensional fabric layers (220a, 220b) grouping together the weft yarns extracted from the blank portion and belonging to a single layer of weft yarns.

15. A method according to claim 13 or claim 14, **characterized in that** it further comprises forming a cutout (620a; 621a) in each two-dimensional fabric layer (620; 621), the cutout being oriented perpendicularly relative to the direction of the yarns of the first plurality of layers.

16. A method of making a fiber reinforcement preform, **characterized in that** it comprises the following steps:
• fabricating a fiber texture according to any one of claims 9 to 15; and
• taking hold of each two-dimensional fabric layer and cutting the yarns of each two-dimensional fabric layer at the limit of the blank portion(s) of the fiber structure.
